# FASCICULE DE BREVET EUROPEEN

(11) **EP 1 234 703 B1**
(45) Date de publication et mention de la délivrance du brevet: **17.11.2004**
(21) Numéro de dépôt: 02290325.6
(22) Date de dépôt: 08.02.2002
(51) Int. Cl.: B60J 7/14, B60J 7/10

(54) **Véhicule automobile de type break transformable**
Automobil vom Typ variabler Kombi
Vehicle of the type variable station car

(30) Priorité: 26.02.2001 FR 0102602
(43) Date de publication de la demande: 28.08.2002
(73) Titulaire: Peugeot Citroen Automobiles SA, 92200 Neuilly sur Seine (FR)
(72) Inventeur: Levitre, Gilles, 92230 Gennevilliers (FR); Cazes, Christophe, 75009 Paris (FR)
(74) Mandataire: Bouget, Lucien

(56) Documents cités:
- EP-A- 0 947 365
- DE-U- 29 817 132
- FR-A- 2 783 761
- US-A- 6 033 012

## Description

La présente invention concerne un véhicule automobile de type break, transformable en un véhicule à benne ouverte vers le haut, appelé pick-up.

Les véhicules automobiles de type break comportent un habitacle ayant une partie avant contenant le poste de conduite du véhicule et au moins un siège avant et une partie arrière contenant au moins une rangée de sièges arrière escamotables de manière à constituer une partie d'un plancher plat s'étendant sur toute la partie arrière de l'habitacle du véhicule dans la position rabattue de ladite rangée de sièges arrière.

L'habitacle comporte, à son extrémité arrière, un ouvrant appelé hayon qui est généralement articulé à sa partie supérieure autour d'un axe transversal de telle manière que ce hayon puisse être déplacé entre une position abaissée de fermeture et une position relevée d'ouverture donnant accès, par l'arrière du véhicule, à la partie arrière de l'habitacle.

Ainsi, après avoir rabattu la rangée de sièges arrière, l'utilisateur dispose d'un volume de transport correspondant à l'ensemble de la partie arrière de l'habitacle accessible par l'ouverture dégagée lors du basculement vers le haut du hayon.

Les véhicules automobiles de type break permettent donc de transporter des charges volumineuses qui sont introduites dans le véhicule par l'ouverture arrière.

Toutefois, l'habitacle de ces véhicules est fermé par un toit, de sorte que l'espace de rangement et de transport à l'intérieur du véhicule est limité vers le haut.

De plus, ce type de véhicules automobiles comporte généralement deux parois délimitant latéralement la partie arrière de l'habitacle et qui comprennent des portes latérales arrière équipées de vitre dans leur partie supérieure et deux parties de carrosserie fixes ou custodes généralement équipées de vitre dans leur partie supérieure.

Les vitres des parties supérieures des parties latérales du véhicule, lorsque celui-ci est utilisé pour le transport d'objets volumineux, risquent d'être cassées, lors du chargement ou pendant le transport d'objets encombrants.

On connaît par ailleurs, des véhicules automobiles à benne ouverte vers le haut appelés pick-up qui comportent, à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine

De tels véhicules, voir par exemple l'exposé du document US-A-6033012 qui couvre le préambule de la revendication 1, présentent des avantages en ce qui concerne leur capacité de chargement par rapport à un véhicule classique ou même par rapport à un véhicule de type break, puisque le niveau de chargement de la benne est pratiquement illimité du fait de l'absence d'un toit recouvrant la benne.

Toutefois, les véhicules de type pick-up ne peuvent être utilisés qu'à des fins utilitaires et seulement par le conducteur et éventuellement un passager, ce qui limite leur intérêt dans le cas de leur utilisation par des particuliers.

En outre, ces véhicules sont difficilement utilisables sur de long parcours routier ou autoroutier.

L'invention a pour but de proposer un véhicule automobile utilisable aussi bien pour le transport de charges que pour le transport de passagers et qui est facilement transformable par des moyens simples et économiques afin de cumuler les avantages des véhicules automobiles de type break et de type pick-up.

L'invention a donc pour objet un véhicule automobile de type break, transformable en un véhicule à benne ouverte vers le haut, appelé pick-up et comportant un habitacle contenant un poste de conduite, au moins un siège avant, une rangée de sièges arrière comprenant au moins une assise et au moins un dossier et délimité par un plancher, deux parois latérales, un pavillon couvrant l'ensemble de l'habitacle et, à sa partie postérieure, par un hayon pivotant, caractérisé en ce que :
- Le pavillon comporte, successivement dans une direction longitudinale du véhicule et de l'avant vers l'arrière, une partie fixe et une partie mobile déplaçable par translation entre une position sensiblement horizontale dans le prolongement de la partie fixe et une position escamotée au-dessus de la partie fixe dans la configuration à benne ouverte du véhicule,
- les parois latérales comportent chacune, à l'arrière de l'habitacle, une ouverture munie d'une vitre de custode déplaçable par pivotement entre une position fermée et une position ouverte dans laquelle chaque vitre de custode est disposée au-dessus dudit dossier de la rangée de sièges arrière pour former une vitre de séparation de l'habitacle en deux parties, et
- une partie supérieure du hayon formant une vitre arrière est escamotable de manière coulissante à l'intérieur d'une partie inférieure dudit hayon.

Selon d'autres modes particuliers de réalisation de l'invention :
- la partie mobile du pavillon est déplaçable par translation au moyen de mécanismes de coulissement entre la position prolongeant la partie fixe et la position escamotée située au-dessus de ladite partie fixe,
- les mécanismes de coulissement de la partie mobile sont dissimulés dans des barres de toit fixées sur les bords latéraux du pavillon,
- la partie mobile est formée par un cadre comportant une ouverture munie d'une vitre déplaçable, dans la configuration break du véhicule, entre une position ouverte et une position fermée,
- les vitres de custode, dans la position de séparation de l'habitacle, coopèrent avec des éléments d'étanchéité fixés sur les parois latérales, le pavillon et le bord supérieur du dossier de la rangée de sièges arrière,
- les vitres de custode comportent des moyens de verrouillage dans la position de séparation de l'habitacle.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective, de trois quarts arrière, d'un véhicule automobile dans sa première configuration ou configuration break,
- la Fig. 2 est une vue en perspective, de trois quarts arrière, du véhicule automobile dans sa seconde configuration à benne ouverte vers le haut ou configuration pick-up,
- la Fig. 3 est une vue schématique en coupe transversale du véhicule automobile dans sa seconde configuration à benne ouverte vers le haut,
- la Fig. 4 est une vue schématique en coupe transversale d'une vitre de custode en position fermée,
- la Fig. 5 est une vue partielle en coupe transversale des vitres de custode en position de séparation de l'habitacle,
- la Fig. 6 est une vue schématique en coupe longitudinale d'une vitre de custode en position de séparation de l'habitacle.

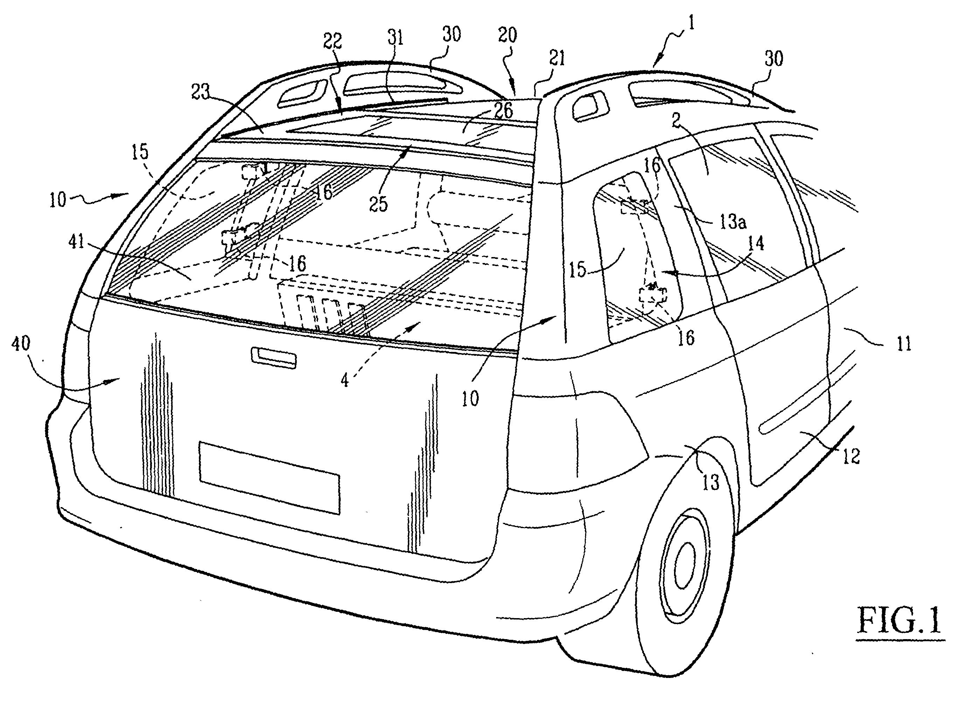

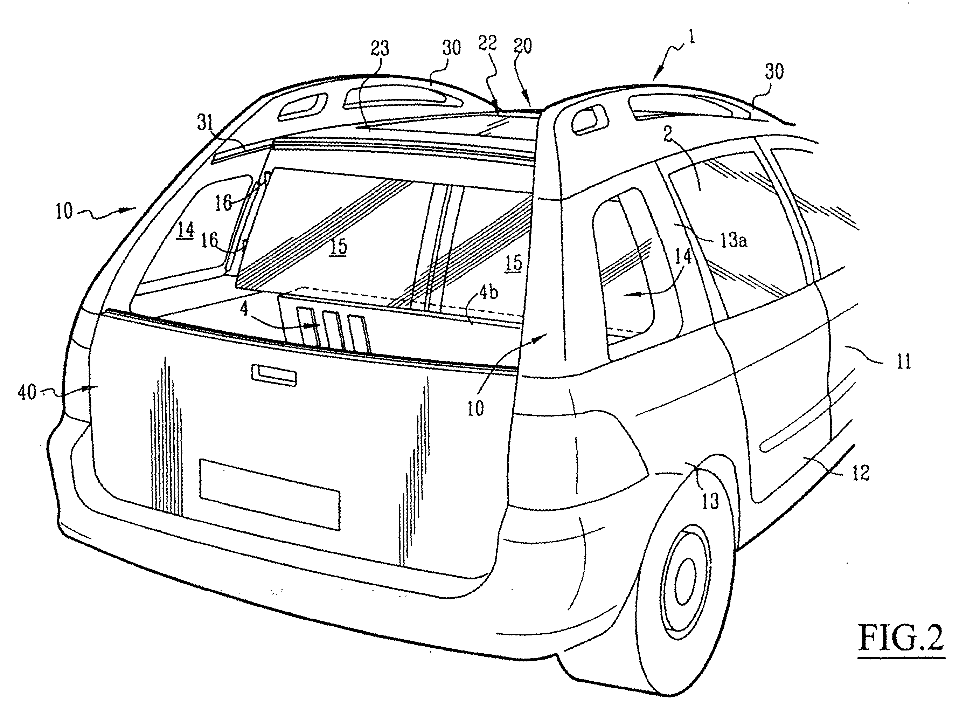

Sur les Figs. 1 et 2, on a représenté un véhicule automobile suivant l'invention de type break désigné de manière générale par la référence 1.

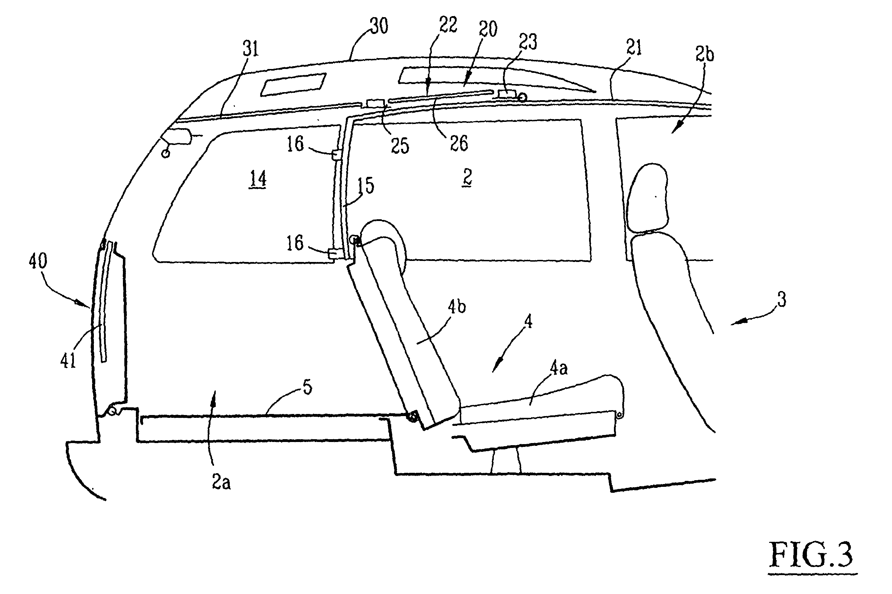

Le véhicule 1 comporte une carrosserie délimitant un habitacle 2 contenant un poste de conduite, au moins un siège avant 3 (Fig. 3) et une rangée de sièges arrière 4 constituée, dans l'exemple de réalisation représenté sur les figures, par une banquette comprenant une assise 4a et un dossier 4b. La rangée de sièges arrière 4 peut également être constituée par deux ou trois sièges indépendants.

De manière classique, l'assise 4a et le dossier 4b de la rangée de sièges arrière 4 sont déplaçables entre une position d'utilisation et une position escamotée dans laquelle l'assise 4a est basculée sensiblement verticalement derrière le siège avant 3 et le dossier 4b est basculé vers l'avant du véhicule de façon à constituer une partie de la surface du plancher plat de l'habitacle 2, notamment pour le transport d'objets volumineux.

L'habitacle 2 est délimité par un plancher 5, deux parois latérales 10, un pavillon 20 couvrant l'ensemble de l'habitacle 2 et, à sa partie postérieure, par un hayon 40.

Chaque paroi latérale 10 est formée, de l'avant jusqu'à l'arrière du véhicule 1, par une porte avant 11, une porte arrière 12 et une custode 13 comportant une ouverture 14 munie d'une vitre de custode 15.

Le pavillon 20 comporte, successivement dans une direction longitudinale du véhicule et de l'avant vers l'arrière, une partie fixe 21, opaque, qui peut être constituée par une tôle et, à l'arrière du dossier 4b de la rangée de sièges arrière 4, une partie mobile 22 déplaçable par translation entre une position sensiblement horizontale dans le prolongement de la partie fixe 21, comme représentée à la Fig. 1, et une position escamotée située au-dessus de ladite partie fixe 21, comme représentée sur les Figs. 2 et 3.

Cette partie mobile 22 du pavillon 20 est déplaçable en translation au moyen de mécanismes de coulissement dissimulés dans des barres de toit 30 fixées sur les bords latéraux du pavillon 20 et constitués par exemple par des galets, non représentés, disposés sur les bords latéraux de ladite partie mobile 22 et coopérant avec des glissières 31 ménagées dans les barres de toit 30.

De préférence, la partie mobile 22 est constituée par un cadre 23 comportant une ouverture 24 munie d'une vitre 25 déplaçable, dans la configuration break du véhicule automobile 1, entre une position fermée et une position ouverte permettant ainsi de pouvoir transporter des objets de grande longueur s'étendant à travers l'ouverture 24 dans la configuration de type break du véhicule automobile.

La partie mobile 22 du pavillon 20 est pourvue, à sa périphérie d'éléments d'étanchéité, non représentés, avec les parties adjacentes de la carrosserie du véhicule automobile.

Le hayon 40 disposé à l'arrière du véhicule automobile 1 de façon à constituer une cinquième porte, est monté pivotant par exemple à sa partie inférieure sur la carrosserie autour d'un axe d'articulation horizontal, non représenté, s'étendant transversalement par rapport à la direction longitudinale du véhicule.

Dans ce cas, le hayon 40 est déplaçable par pivotement entre une position sensiblement verticale d'obturation de la partie arrière de l'habitacle 2 et une position sensiblement horizontale dans le prolongement plancher 5 de façon à augmenter la surface de chargement de ce plancher.

De plus, le hayon 40 comporte dans sa partie supérieure, une vitre 41 (Fig. 1), constituant la lunette arrière du véhicule dans la configuration de type break. Cette vitre 41 est escamotable de manière coulissante à l'intérieur de la partie inférieure du hayon 40.

Chaque vitre de custode 15 est déplaçable par pivotement autour d'un axe vertical entre une position fermée représentée sur la Fig. 1 et une position ouverte dans laquelle chaque vitre de custode 15 est disposée au-dessus du dossier 4b de la rangée de sièges arrière 4 pour former une vitre de séparation de l'habitacle 2 en deux parties, respectivement 2a et 2b, comme représentée sur les Figs. 2 et 3.

Pour cela, chaque vitre de custode 15 est fixée sur le montant avant de custode 13a au moyen d'au moins une articulation 16.

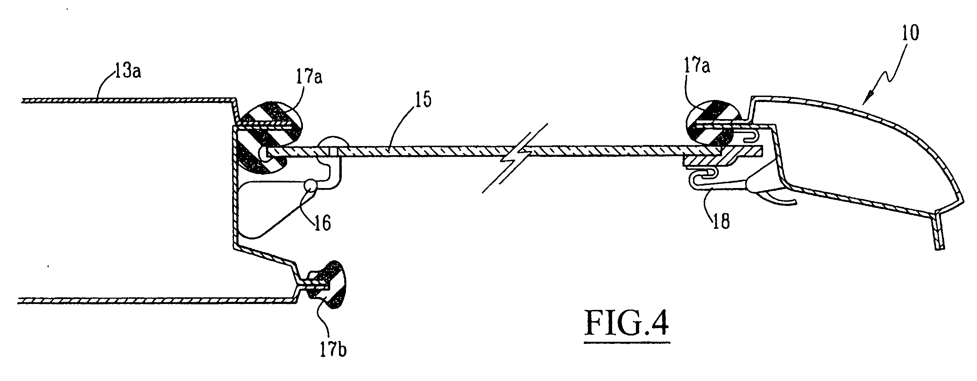

Dans la position fermée d'obturation de l'ouverture 14 comme représentée à la Fig. 4, chaque vitre de custode 14 coopère avec un joint d'étanchéité 17a monté sur le pourtour de l'ouverture 14 et est maintenue dans cette position par exemple par un loquet 18.

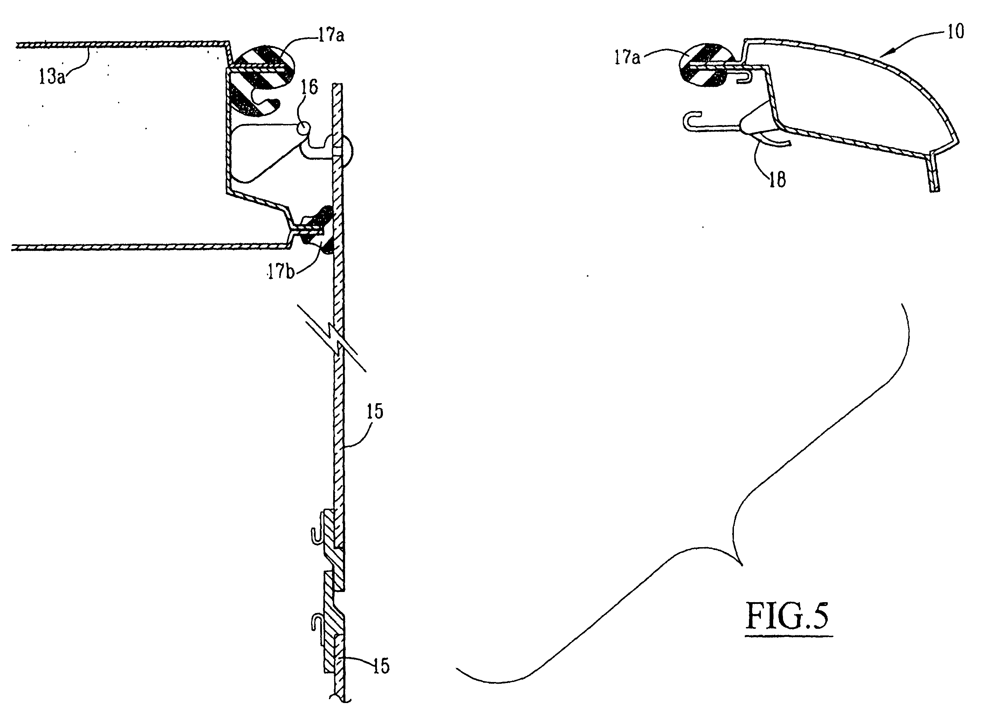

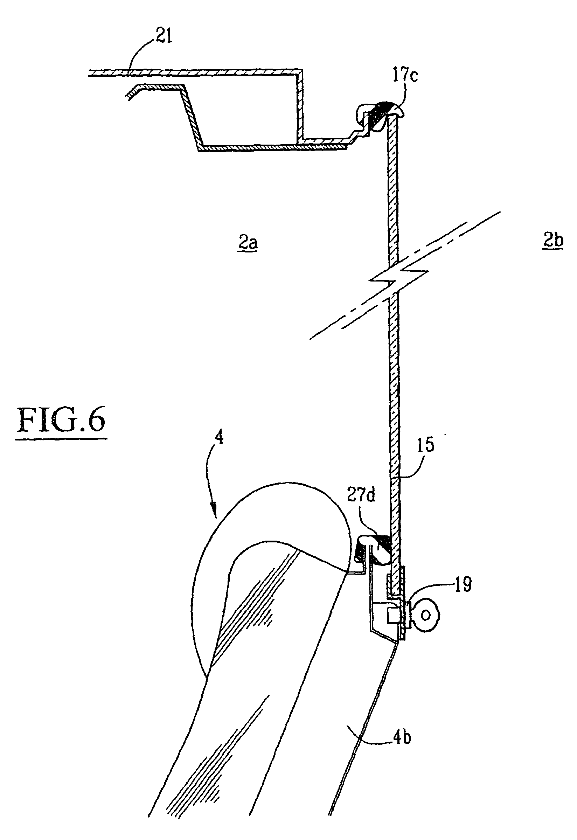

Dans la position de séparation de l'habitacle 2 en deux parties, respectivement 2a et 2b, comme représentée à la Fig. 5, les bords postérieurs des vitres de custode 15 se chevauchent et chacune de ces vitres de custode 15 coopère avec un joint d'étanchéité 17b fixé sur chaque montant avant de custode 13a tandis que le bord supérieur de ces vitres de custode 15 coopère avec un joint d'étanchéité 17c fixé sur le bord postérieur de la partie fixe 21 du pavillon 20 et le bord inférieur desdites vitres de custode 15 coopère avec un joint d'étanchéité 17d fixé sur le bord supérieur du dossier 4b de la rangée de sièges arrière 4 (Fig. 6) de façon à assurer l'étanchéité entre les deux parties, respectivement 2a et 2b, de l'habitacle 2.

Enfin, les vitres de custode 15 comportent des moyens de verrouillage 19 dans la position de séparation de l'habitacle, comme représenté à la Fig. 6, et qui sont constitués par exemple par une serrure.

Dans la configuration break du véhicule automobile 1, la rangée de sièges arrière 4 peut être placée en position d'utilisation pour offrir cinq places ou en position escamotée pour deux places.

Dans cette configuration, la partie mobile 22 du pavillon 20 est placée dans le prolongement de la partie fixe 21 de façon à fermer complètement le haut de l'habitacle 2 et le hayon 40 est fermé. Les vitres de custode 15 sont également fermées et la vitre coulissante 41 de ce hayon 40 est déployée de façon à constituer la lunette arrière du véhicule automobile.

La vitre 26 de la partie mobile 22 peut être ouverte pour pouvoir transporter des objets de grande longueur et s'étendant à travers l'ouverture 25 de cette partie mobile 22.

Dans la configuration de type pick-up du véhicule automobile 1, la partie mobile 22 du pavillon 20 est escamotée par coulissement au-dessus de la partie fixe 21 et les vitres de custode 15 sont ouvertes et déplacées de façon à être positionnées dans le prolongement du dossier 4b de la rangée de sièges arrière 4 permettant ainsi d'isoler la partie 2a de l'habitacle 2 de la partie 2b.

La vitre coulissante 41 du hayon 40 est escamotée dans la partie inférieure dudit hayon 40 et ce hayon 40 peut être placé dans une position sensiblement horizontale de façon à prolonger le plancher 5 et à augmenter la surface de chargement du véhicule automobile.

Le véhicule automobile selon l'invention permet de passer facilement d'une configuration break à une configuration pick-up de telle sorte que ce véhicule puisse servir aussi bien pour le transport de passagers ou de charges dans un habitacle entièrement fermé, que pour le transport de charges dans une benne ouverte vers le haut et facilement accessible par l'arrière.

Le véhicule automobile selon l'invention est particulièrement économique du fait de sa polyvalence et peut éviter l'achat d'un second véhicule, par un utilisateur désirant effectuer des transports sur route à grande distance, de charges ou de passagers, dans de bonne condition de confort et de protection climatique, et des transports purement utilitaires de charges volumineuses, dans une utilisation locale.

## Revendications

1. Véhicule automobile de type break transformable en un véhicule à benne ouverte vers le haut, appelé pick-up, et comportant un habitacle (2) contenant un poste de conduite, au moins un siège avant (3), une rangée de sièges arrière (4) comprenant au moins une assise (4a) et au moins un dossier (4b) et délimité par un plancher (5), deus parois latérales (10), un pavillon (20) couvrant l'ensemble de l'habitacle (2) et, à sa partie postérieure, par un hayon (40) pivotant, **caractérisé en ce que** :
- le pavillon (20) comporte, successivement dans une direction longitudinale du véhicule et de l'avant vers l'arrière, une partie fixe (21) et une partie mobile (22) déplaçable par translation entre une position sensiblement horizontale dans le prolongement de la partie fixe (21) et une position escamotée au-dessus de ladite partie fixe (21) dans la configuration à benne ouverte du véhicule (1),
- les parois latérales (10) comportent chacune, à l'arrière de l'habitacle (2), une ouverture (14) munie d'une vitre de custode (15) déplaçable par pivotement entre une position fermée et une position ouverte dans laquelle chaque vitre de custode (15) est disposée au-dessus dudit dossier (4b) de la rangée de sièges arrière (4) pour former une vitre de séparation de l'habitacle en deux parties (2a, 2b), et
- une partie supérieure du hayon formant une vitre arrière (41) est escamotable de manière coulissante à l'intérieur d'une partie inférieure dudit hayon (40).

2. Véhicule automobile selon la revendication 1, **caractérisé en ce que** la partie mobile (22) du pavillon (20) est déplaçable par translation au moyen de mécanismes de coulissement entre la position prolongeant la partie fixe (21) et la position escamotée au-dessus de ladite partie fixe (21).

3. Véhicule automobile selon la revendication 2, **caractérisé en ce que** les mécanismes de coulissement de la partie mobile (22) sont dissimulés dans des barres de toit (30) fixées sur les bords latéraux du pavillon (20).

4. Véhicule automobile selon l'une quelconque des revendications 1 à 3, **caractérisé en ce que** la partie mobile (22) est formée par un cadre (23) comportant une ouverture (25) munie d'une vitre (26) déplaçable, dans la configuration break du véhicule, entre une position ouverte et une position fermée.

5. Véhicule automobile selon l'une quelconque des revendications précédentes, **caractérisé en ce que** les vitres de custode (15), dans la position de séparation de l'habitacle, coopèrent avec des éléments d'étanchéité (17a, 17b, 17c, 17d) fixés sur les parois latérales (10), le pavillon (20) et le bord supérieur du dossier (4b).

6. Véhicule automobile selon l'une quelconque des revendications précédentes, **caractérisé en ce que** les vitres de custode (15) comportent des moyens (19) de verrouillage dans la position de séparation de l'habitacle (2).

## Patentansprüche

1. Kraftfahrzeug vom Typ Kombi, das in ein Fahrzeug mit nach oben offenem Wagenkasten umwandelbar ist, welches Pick-up genannt wird und einen Innenraum (2) umfaßt, der einen Fahrersitz, mindestens einen Vordersitz (3), eine Reihe von Rücksitzen (4) mit mindestens einer Sitzfläche (4a) und mindestens einer Rückenlehne (4b) enthält, und durch einen Boden (5), zwei Seitenwände (10), ein Dach (20), das den gesamten Innenraum (2) bedeckt, und an seinem hinteren Teil durch eine schwenkbare Heckklappe (40) begrenzt ist, **dadurch gekennzeichnet, daß**:
- das Dach (20) nacheinander in einer Längsrichtung des Fahrzeugs und von vom nach hinten einen festen Teil (21) und einen beweglichen Teil (22) umfaßt, der durch eine Verschiebung zwischen einer im wesentlichen horizontalen Position in der Verlängerung des festen Teils (21) und einer eingezogenen Position über dem festen Teil (21) in der Anordnung des Fahrzeugs (1) mit offenem Wagenkasten verschiebbar ist,
- die Seitenwände (10) jeweils hinter dem Innenraum (2) eine Öffnung (14) umfassen, die mit einer Karosserieteil-Fensterscheibe (15) ausgestattet ist, die durch Schwenken zwischen einer geschlossenen Position und einer offenen Position, in der jede Karosserieteil-Fensterscheibe (15) über der Rückenlehne (4b) der Reihe von Rücksitzen (4) angeordnet ist, verlagerbar ist, um eine Fensterscheibe zum Aufteilen des Innenraums in zwei Teile (2a, 2b) zu bilden, und
- ein oberer Teil der Heckklappe, der eine Heckscheibe (41) bildet, in gleitender Weise in das Innere eines unteren Teils der Heckklappe (40) einziehbar ist.

2. Kraftfahrzeug nach Anspruch 1, **dadurch gekennzeichnet, daß** der bewegliche Teil (22) des Dachs (20) durch eine Verschiebung mittels Gleitmechanismen zwischen der Position, die den festen Teil (21) verlängert, und der eingezogenen Position oberhalb des festen Teils (21) verschiebbar ist.

3. Kraftfahrzeug nach Anspruch 2, **dadurch gekennzeichnet, daß** die Gleitmechanismen des beweglichen Teils (22) in Dachstangen (30) versteckt sind, die an den seitlichen Rändern des Dachs (20) befestigt sind.

4. Kraftfahrzeug nach einem der Ansprüche 1 bis 3, **dadurch gekennzeichnet, daß** der bewegliche Teil (22) aus einem Rahmen (23) mit einer Öffnung (25) gebildet ist, die mit einer Fensterscheibe (26) versehen ist, welche in der Kombianordnung des Fahrzeugs zwischen einer offenen Position und einer geschlossenen Position verschiebbar ist.

5. Kraftfahrzeug nach einem der vorangehenden Ansprüche, **dadurch gekennzeichnet, daß** die Karosserieteil-Fensterscheiben (15) in der Position zur Aufteilung des Innenraums mit Dichtungselementen (17a, 17b, 17c, 17d) zusammenwirken, die an den Seitenwänden (10), am Dach (20) und am oberen Rand der Rückenlehne (4b) befestigt sind.

6. Kraftfahrzeug nach einem der vorangehenden Ansprüche, **dadurch gekennzeichnet, daß** die Karosserieteil-Fensterscheiben (15) Mittel (19) zur Verriegelung in der Position zur Aufteilung des Innenraums (2) umfassen.

## Claims

1. Motor vehicle of the estate car type which can be converted into a vehicle having a body which is open at the top, known as a pick-up, comprising a passenger compartment (2) which contains a driver's position, at least one front seat (3) and a. row of rear seats (4) comprising at least one sitting surface (4a) and at least one back (4b), and which is delimited by a floor (5), two side walls (10), a roof (20) covering the whole of the passenger compartment (2) and, at its rear part, by a pivoting tailgate (40), **characterized in that**:
- the roof (20) comprises, successively in a longitudinal direction of the vehicle, and from the front towards the rear, a fixed part (21) and a moving part (22) which can be moved translationally between a substantially horizontal position in the continuation of the fixed part (21) and a retracted position above the said fixed part (21), in the open-body configuration of the vehicle (1),
- the side walls (10) each comprise, at the rear of the passenger compartment (2), an opening (14) provided with a rear side window (15) which can be moved by pivoting between a closed position and an open position in which each rear side window (15) is arranged above the said back (4b) of the row of rear seats (4) so as to form a window separating the passenger compartment into two parts (2a, 2b), and
- an upper part of the tailgate forming a rear window (41) can be retracted in a sliding manner inside a lower part of the said tailgate (40).

2. Motor vehicle according to Claim 1, **characterized in that** the moving part (22) of the roof (20) can be moved translationally by means of sliding mechanisms between the position extending the fixed part (21) and the retracted position above the said fixed part (21).

3. Motor vehicle according to Claim 2, **characterized in that** the sliding mechanisms for the moving part (22) are concealed within roof bars (30) fastened to the lateral edges of the roof (20).

4. Motor vehicle according to any one of Claims 1 to 3, **characterized in that** the moving part (22) is formed by a frame (23) comprising an opening (25) provided with a window (26) which, in the estate car configuration of the vehicle, can be moved between an open position and a closed position.

5. Motor vehicle according to any one of the preceding claims, **characterized in that**, in the passenger compartment-separating position, the rear side windows (15) cooperate with sealing elements (17a, 17b, 17c, 17d) fastened to the side walls (10), the roof (20) and the upper edge of the back (4b).

6. Motor vehicle according to any one of the preceding claims, **characterized in that** the rear side windows (15) comprise means (19) for locking them in the position in which they separate the passenger compartment (2).
